(19) **Europäisches Patentamt**

**European Patent Office**

**Office européen des brevets**

(11) **EP 1 054 412 A2**

(12) **EUROPÄISCHE PATENTANMELDUNG**

(43) Veröffentlichungstag:
22.11.2000 Patentblatt 2000/47

(51) Int. Cl.⁷: **G21C 17/022**, G21C 19/307

(21) Anmeldenummer: 00109736.9

(22) Anmeldetag: 08.05.2000

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **21.05.1999 DE 19923374**

(71) Anmelder:
**SIEMENS AKTIENGESELLSCHAFT**
**80333 München (DE)**

(72) Erfinder: **Henzel, Norbert, Dr.**
**91058 Erlangen (DE)**

(54) **Verfahren zur Korrosionsverminderung im Primärkreislauf eines Kernkraftwerks**

(57) Die Erfindung betrifft ein Verfahren zur Korrosionsverminderung an einem Bauteil im Primärkreislauf eines Kernkraftwerkes. Zur Beseitigung von im Primärkühlmittel durch Wasserradiolyse gebildetem Oxidationsmittel, das z.B. Sauerstoff und/oder Wasserstoffperoxid sein kann, wird in das Primärkühlmittel Kohlenstoffmonoxid eingespeist.

EP 1 054 412 A2

**Beschreibung**

Die Erfindung betrifft ein Verfahren zur Korrosionsverminderung an einem Bauteil im Primärkreislauf eines Kernkraftwerks, wobei im Primärkühlmittel durch Wasserradiolyse gebildetes Oxidationsmittel beseitigt wird.

Aus der JP 3-255398 A (Patent Abstracts of Japan) ist es bekannt, zur Verminderung der radioaktiven Dosisleistung innerhalb eines Kernkraftwerks ein Kohlenstoffoxid in das Reaktorwasser zu injizieren, wobei das Kohlenstoffisotopenverhältnis im injizierten Kohlenstoffoxid auf einen gewünschten Wert eingestellt ist.

In einem Siedewasserreaktor wird das Kühlmittel, das mit dem Reaktorkern in Kontakt kommt, Primärkühlmittel genannt. Im Strahlenfeld des Reaktorkerns eines Siedewasserreaktors kommt es im Primärkühlmittel zu einer Wasserradiolyse. Dabei entstehen aus Wasser eine ganze Reihe von Zersetzungsprodukten. Im Wasser verbleiben als Endprodukte unter anderem Wasserstoffperoxid und Sauerstoff. Diese Oxidationsmittel können eine interkristalline Spannungsrisskorrosion an Metallbauteilen, insbesondere an den Kerneinbauten eines Siedewasserreaktors, bewirken. Die Oxidationsmittel erhöhen also das Korrosionspotential.

Um den Auswirkungen der Wasserradiolyse entgegenzuwirken und damit das Korrosionspotential niedrig zu halten, ist z.B. in der DE 196 02 213 A1 vorgeschlagen worden, in das Primärkühlmittel Wasserstoff einzuspeisen. Diese sogenannte Wasserstofffahrweise ist eine wasserchemische Präventivmaßnahme gegen interkristalline Spannungsrisskorrosion. Der Wasserstoff reagiert nämlich mit den durch die Wasserradiolyse gebildeten Oxidationsmitteln Sauerstoff und Wasserstoffperoxid unter Bildung von Wasser, sofern ausreichend viel Wasserstoff bereitgestellt wird. Falls nämlich nur relativ wenig Wasserstoff zugeleitet wird, würde dieser, wie schon der bei der Radiolyse gebildete Wasserstoff, aus dem Wasser ausgasen, bevor er mit Sauerstoff oder Wasserstoffperoxid reagieren könnte.

Die Wasserstofffahrweise bringt den Nachteil mit sich, dass selbst bei großen Wasserstoffmengen kaum sämtliche Komponenten des Primärsystems des Kernkraftwerks vom Wasserstoff erreicht werden können, so dass die Gefahr einer Spannungsrisskorrosion nicht überall zu reduzieren ist. Außerdem bildet der eingespeiste Wasserstoff mit im Wasser vorhandenen Stickstoffverbindungen flüchtige Verbindungen, z.B. Ammoniak, was eine Folge der durch die Wasserstoffzugabe bewirkten reduzierenden Bedingungen im Primärkühlmittel ist. Bei oxidierenden Bedingungen würde stattdessen gelöstes Nitrit/Nitrat entstehen. Da die flüchtigen Stickstoffverbindungen das radioaktive N-16-Isotop enthalten, wird bei der Wasserstofffahrweise die Dosisleistung des Frischdampfes erhöht. Darüber hinaus wird durch die Wasserstofffahrweise, die reduzierende Bedingungen schafft, Metalloxid von Oberflächen, die mit Primärkühlmittel in Verbindung kommen, abgelöst. Dadurch kann das Kobalt-60-Inventar des Primärkühlmittels erhöht werden.

Um die Dosisleistungserhöhung zu bekämpfen, ist - so z.B. in der US 5,287,392 - die Verwendung von Edelmetallkatalysatoren bereits vorgeschlagen worden. Edelmetallverbindungen bilden nämlich infolge hydrothermaler Zersetzung katalytisch wirkende Schichten auf Oberflächen, die mit dem Primärkühlmittel in Kontakt stehen. Man kommt dann mit einer geringeren Wasserstoffkonzentration gegenüber der Fahrweise ohne Edelmetallkatalysator aus, was zur Folge hat, dass weniger flüchtiges N-16 entsteht. Da hierfür in einem Kernkraftwerk beim Abfahren zum Brennelementwechsel mehrere Kilogramm geeignete, teure Edelmetallverbindungen benötigt werden, ist dieses Verfahren extrem unwirtschaftlich. Außerdem wird mehr Zeit als sonst für den Abfahrvorgang benötigt.

Der Erfindung liegt die Aufgabe zugrunde, ein Verfahren zur Beseitigung von Oxidationsmittel aus dem Primärkühlmittel eines Kernkraftwerkes anzugeben, das im Vergleich zur bekannten Wasserstofffahrweise größere Bereiche des Kühlkreislaufs erfasst, die Dosisleistung des Frischdampfes nur unwesentlich erhöht und darüber hinaus ohne teure Edelmetallverbindungen auskommt.

Die Aufgabe wird gemäß der Erfindung dadurch gelöst, dass zur Beseitigung des Oxidationsmittels in das Primärkühlmittel Kohlenstoffmonoxid eingespeist wird.

Kohlenstoffmonoxid reagiert auf verschiedene Weise sowohl mit Sauerstoff als auch vor allem mit Wasserstoffperoxid. Es ergeben sich die folgenden Reaktionsgleichungen:

$$2CO+O_2 \rightarrow 2CO_2.$$

$$CO+H_2O_2 \rightarrow CO_2+H_2O.$$

Es werden also mittels Kohlenstoffmonoxid die durch Radiolyse entstandenen Oxidationsmittel Sauerstoff und Wasserstoffperoxid beseitigt. Es entstehen unschädliche Substanzen, nämlich Kohlenstoffdioxid und Wasser. Die Gefahr einer Spannungsrisskorrosion wird vorteilhafterweise deutlich vermindert.

Im Vergleich zu Wasserstoff wird mit Kohlenstoffmonoxid der Vorteil erzielt, dass es erheblich besser im Primärkühlmittel verbleibt. Die Flüchtigkeit von Kohlenstoffmonoxid ist deutlich kleiner als diejenige von Wasserstoff. Es können folglich größere Bereiche des Kühlkreislaufs mit Kohlenstoffmonoxid versehen werden, bevor es aus dem Primärkühlmittel ausgasen kann. Der Massenverteilungskoeffizient von Kohlenstoffmonoxid zwischen Dampf und Wasser ist um 40 % kleiner als derjenige von Wasserstoff. Man braucht folglich deutlich weniger Kohlenstoffmonoxid, als Wasserstoff gebraucht würde.

Als Folge davon wird vorteilhafterweise die Entstehung flüchtiger N-16-Verbindungen zurückgedrängt.

Schließlich benötigt man bei der Verwendung von Kohlenstoffmonoxid keinen Katalysator und somit auch keine teueren Edelmetallverbindungen.

Bei einer Temperatur, wie sie in einem Siedewasserreaktor üblich ist, kann Kohlenstoffmonoxid darüber hinaus mit Wasser reagieren, wobei Wasserstoff und Kohlenstoffdioxid gebildet werden. Die Gibbssche Reaktionsenthalpie der Reaktion

$$CO + H_2O \rightarrow H_2 + CO_2$$

ist nämlich bei der Betriebstemperatur eines Siedewasserreaktors negativ. Das heißt, dass Kohlenstoffmonoxid bei gleicher molarer Menge etwas stärker reduzierend wirkt als Wasserstoff. Man erzielt als willkommenen Nebeneffekt den zusätzlichen Vorteil, dass geringe Mengen Wasserstoff gebildet werden, die zusätzlich zum Kohlenstoffmonoxid reduzierend wirken.

Kohlenstoffmonoxid wird vorteilhafterweise kaum durch radioaktive Strahlung zersetzt. Es entstehen also fast keine Folgeprodukte. Das neben Wasser und geringen Mengen Wasserstoff bei der Beseitigung der Oxidationsmittel entstehende Kohlenstoffdioxid ist flüchtig und hat folglich keine Auswirkungen auf das Primärkühlmittel. Es ist weder eine nennenswerte Erhöhung der Leitfähigkeit des Primärkühlmittels noch eine nennenswerte Ablagerung von Folgeprodukten zu erwarten.

Das Kohlenstoffmonoxid wird beispielsweise in den Wasser-Dampf-Kreislauf eines Siedewasserreaktors eingespeist. Vorzugsweise wird es dem Reaktorspeisewasser beigemischt.

Nach einem anderen Beispiel wird das Kohlenstoffmonoxid unmittelbar in das Primärkühlmittel eines Siedewasserreaktors eingespeist. Ein besonders geeigneter Ort für eine Einspeisung befindet sich in Strömungsrichtung hinter einem Filter für die Reaktorwasserreinigung. Ein solcher Filter ist üblicherweise in einer eigenen Leitung angeordnet, die vom Reaktorbehälter ausgeht und in diesen, z.B. über die Zuführung für Reaktorspeisewasser, mündet.

Beispielsweise wird soviel Kohlenstoffmonoxid in das Primärkühlmittel eingespeist, dass bezogen auf das insgesamt vorhandene Primärkühlmittel und ohne Berücksichtigung der reaktionsbedingten Abnahme des Kohlenstoffmonoxids eine Konzentration zwischen 50 µg/kg und 1000 µg/kg entstehen würde. Seine Wirkung kann sich in großen Bereichen des Kühlkreislaufs einstellen, da das Kohlenstoffmonoxid mit dem dort vorhandenen Oxidationsmittel reagiert, bevor es ausgasen kann. Dabei bilden sich im wesentlichen Kohlenstoffdioxid und Wasser.

Mit dem Verfahren nach der Erfindung wird insbesondere der Vorteil erzielt, dass die interkristalline Spannungsrisskorrosion an Bauteilen eines Kernkraftwerkes, die auf Radiolyseprodukte zurückzuführen ist, mit einfachen und kostengünstigen Mitteln deutlich eingedämmt wird. Hinzu kommt, dass im Vergleich zu bekannten Verfahren deutlich weniger radioaktive Produkte in den Frischdampf oder in das Primärkühlmittel gelangen.

**Patentansprüche**

1. Verfahren zur Korrosionsverminderung an einem Bauteil im Primärkreislauf eines Kernkraftwerkes, wobei im Primärkühlmittel durch Wasserradiolyse gebildetes Oxidationsmittel beseitigt wird,
   **dadurch gekennzeichnet,** dass zur Beseitigung des Oxidationsmittels in das Primärkühlmittel Kohlenstoffmonoxid eingespeist wird.

2. Verfahren nach Anspruch 1,
   **dadurch gekennzeichnet,** dass das Kohlenstoffmonoxid in den Wasser-Dampf-Kreislauf eines Siedewasserreaktors eingespeist wird.

3. Verfahren nach Anspruch 2,
   **dadurch gekennzeichnet,** dass das Kohlenstoffmonoxid dem Reaktorspeisewasser beigemischt wird.

4. Verfahren nach einem der Ansprüche 1 bis 3,
   **dadurch gekennzeichnet,** dass das Kohlenstoffmonoxid unmittelbar in das Primärkühlmittel eines Siedewasserreaktors eingespeist wird.

5. Verfahren nach Anspruch 4,
   **dadurch gekennzeichnet,** dass das Kohlenstoffmonoxid in Strömungsrichtung des Primärkühlmittels hinter einem Filter für die Reaktorwasserreinigung eingespeist wird.

6. Verfahren nach einem der Ansprüche 1 bis 5,
   **dadurch gekennzeichnet,** dass so viel Kohlenstoffmonoxid in das Primärkühlmittel eingespeist wird, dass ohne Berücksichtigung der reaktionsbedingten Abnahme die Konzentration des Kohlenstoffmonoxids im Primärkühlmittel zwischen 50 µg/kg und 1000 µg/kg betragen würde.